# EUROPEAN PATENT APPLICATION

(11) **EP 4 539 016 A1**
(43) Date of publication of application: **16.04.2025**
(21) Application number: 23383052.0
(22) Date of filing: 13.10.2023
(51) Int. Cl.: G08G 5/00, G06Q 50/30

(54) **AIRPORT CONGESTION MONITORING**

(71) Applicant: The Boeing Company, Arlington, VA 22202 (US)
(72) Inventor: GÜEMES JIMENEZ, Alejandro, 28042 MADRID (ES); COSTAS ÁLVAREZ, Pablo, 28042 MADRID (ES); DREWS, Robin Christian, 63263 NEU-ISENBURG (DE)
(74) Representative: ZBM Patents - Zea, Barlocci & Markvardsen

(57) **Abstract**

A device includes one or more processors configured to obtain, from one or more sources of global data associated with aircraft traffic, historical data corresponding to historical usage metrics for a particular airport. The one or more processors are configured to process the historical usage metrics to generate a distribution model associated with usage of the particular airport. The one or more processors are configured to obtain, from the one or more sources of global data, data corresponding to current usage metrics for the particular airport. The one or more processors are also configured to determine, based on the distribution model and the current usage metrics for the particular airport, an airport congestion level for the particular airport.

## Description

### FIELD OF THE DISCLOSURE

The present disclosure is generally related to monitoring airport congestion.

### BACKGROUND

Air traffic networks are highly dependent on airport arrival and departure processes, which are linked to capacity constraints and delay propagation. In order to minimize delays in air traffic networks and generate an improved balance between demand and capacity balance, it is important to accurately assess and predict the potential congestion in airports.

Traditionally, congestion at an airport is measured based on comparing scheduled times to actual times of flights departing or arriving at the airport. For example, a traditional metric used for calculating congestion is the average departure delay - e.g., the average of the difference between each flight's scheduled departure time and actual departure time - over a time period. However, flight schedule information is often inaccurate and may vary significantly over time, in addition to not being easily accessible outside of each particular airport.

Another conventional approach that may be used by airports is to calculate congestion based on the passenger flow and resources that are available, such as ground personnel and tower air traffic controllers. This approach may work well for generating custom congestion calculations for a specific airport, but because the input data (e.g., passenger flow and resource availability) is not globally available and the models that are used may be customized for the particular airports, the utility of such techniques is largely restricted to local calculations at each particular airport.

An improved system to predict potential airport congestion that does not rely on schedule information or specific data that is only available at each specific airport would enable enhanced operation and efficiency of air traffic networks.

### SUMMARY

One aspect of the subject matter disclosed in detail below is a device that includes one or more processors configured to obtain, from one or more sources of global data associated with aircraft traffic, historical data corresponding to historical usage metrics for a particular airport. The one or more processors are configured to process the historical usage metrics to generate a distribution model associated with usage of the particular airport. The one or more processors are configured to obtain, from the one or more sources of global data, data corresponding to current usage metrics for the particular airport. The one or more processors are also configured to determine, based on the distribution model and the current usage metrics for the particular airport, an airport congestion level for the particular airport.

Another aspect of the subject matter disclosed in detail below is a method that includes obtaining, at one or more processors, historical data from one or more sources of global data associated with aircraft traffic, the historical data corresponding to historical usage metrics for a particular airport. The method includes processing, at the one or more processors, the historical usage metrics to generate a distribution model associated with usage of the particular airport. The method includes obtaining, at the one or more processors, data corresponding to current usage metrics for the particular airport from the one or more sources of global data. The method also includes determining, based on the distribution model and the current usage metrics for the particular airport, an airport congestion level for the particular airport.

Another aspect of the subject matter disclosed in detail below is a non-transitory computer-readable medium that includes instructions that, when executed by one or more processors, cause the one or more processors to obtain, from one or more sources of global data associated with aircraft traffic, historical data corresponding to historical usage metrics for a particular airport. The instructions, when executed by the one or more processors, cause the one or more processors to process the historical usage metrics to generate a distribution model associated with usage of the particular airport. The instructions, when executed by the one or more processors, cause the one or more processors to obtain, from the one or more sources of global data, data corresponding to current usage metrics for the particular airport. The instructions, when executed by the one or more processors, also cause the one or more processors to determine, based on the distribution model and the current usage metrics for the particular airport, an airport congestion level for the particular airport.

The features, functions, and advantages described herein can be achieved independently in various implementations or may be combined in yet other implementations, further details of which can be found with reference to the following description and drawings.

### BRIEF DESCRIPTION OF THE DRAWINGS

FIG. 1 is a diagram that illustrates a system operable to monitor airport congestion, in accordance with some examples of the present disclosure.
FIG. 2 is a diagram of components of the system of FIG. 1, in accordance with some examples of the present disclosure.
FIG. 3 is a diagram of operations that may be performed by the system of FIG. 1, in accordance with some examples of the present disclosure.
FIG. 4 is a diagram of operations that may be performed by the system of FIG. 1, in accordance with some examples of the present disclosure.
FIG. 5 is a diagram of probability distributions that may be generated by the system of FIG. 1, in accordance with some examples of the present disclosure.
FIG. 6 is a flowchart illustrating an example of a method of monitoring airport congestion using the system of FIG. 1.
FIG. 7 is a block diagram of a computing environment including a computing device configured to support aspects of computer-implemented methods and computer-executable program instructions (or code) according to the present disclosure.

### DETAILED DESCRIPTION

Aspects disclosed herein present systems and methods for monitoring airport congestion. Conventional techniques for monitoring airport congestion typically rely on schedule information that may be inaccurate and difficult to access outside of each particular airport and/or other data such as passenger flow and resource availability that is only available at each particular airport, imposing difficulties for air traffic management to predict potential airport congestion for air traffic between multiple airports.

The present disclosure solves the problem of predicting potential airport congestion using airport data that is often inaccurate or difficult to access by introducing techniques for using globally available data in order to calculate congestion in any airport in the world for which such data is available. In accordance with the disclosed techniques, airport congestion is calculated from information that may be extracted from three different types of globally available data: surveillance information (e.g., position reports), airport mapping database (AMDB) data, and meteorological reports.

Airport traffic information can be computed in real-time from such globally available data and used to determine the congestion level in each airport of interest. Examples of traffic information that can be used include, for a particular time interval and at a particular airport, the number of taxi operations for incoming aircraft, the number of taxi operations for outgoing aircraft, the number of aircraft that have taken off, the number of aircraft that have landed, the number of aircraft on approach, the number of aircraft moving on the ground, and the number of aircraft following a holding pattern. These traffic counts can be determined using a sliding window to measure occurrences in various time intervals. In addition, weather information may be used to distinguish between different types of weather conditions, such as different visibility conditions, at the airport during each time interval. Such information may be grouped by airport and hour of the day to obtain historical data distributions of the total operations occurring at that hour in the specified airport. The historical data distributions may further be refined based on the various types of weather conditions that were present at the specified airports in which the operations occurred.

To reduce the storage requirements, transmission bandwidth, and complexity associated with large sets of raw historical data, a distribution model generator such as a kernel density estimator (KDE) is used to obtain a probabilistic density function describing the raw data of each of the historical data distributions. One of the benefits of using KDE to represent historical data distributions is that KDE can be used with both univariate and multivariate distributions, and a KDE model can be used to obtain statistics from the distribution with relatively low computational complexity.

Once a KDE model is generated based on historical data for a particular airport, time of day, and weather condition, one or more percentiles, such as the 95th and 99th percentiles of each distribution, can be computed. These percentiles can be used to define operational region(s) associated with congestion states for each airport at each time of day and weather condition.

A system using the disclosed techniques thus uses a data-driven statistical approach to determine or predict the congestion of a particular airport at a particular time based on a comparison of current traffic operations and weather conditions to the historical data distribution(s) determined for that airport. For example, the system can determine, based on the current traffic operations and weather conditions for an airport, an operational condition for the airport (e.g., above or below the 95th percentile and/or the 99th percentile based on the KDE probabilistic density function) to determine the current congestion state of the airport. According to an example, when the operational condition reaches the 95th percentile, the system generates a warning message for that airport to let the customers know the airport is becoming congested and that delays are likely. In the same manner, when the operational conditions reach the 99th percentile, another message may be generated to report a fully-congested state. When the operational conditions fall back below the 95th percentile, another message may be generated to declare the airport is no longer congested.

The disclosed systems and methods therefore provide a holistic overview over worldwide airport congestion status through accurate and global calculation of airport congestion using publicly available data sources instead of incomplete datasets or data that is very specific for individual airports and that is not globally available. As a result, use of the disclosed systems and methods enable more accurate flight planning.

Specific examples are illustrated in the figures and the following description. All of the figures are covered by the present solution with features common across the various figures. The figures include multiple examples of different types of systems, devices, and operations that are possible in conjunction with the present solution. It will be appreciated that those skilled in the art will be able to devise various arrangements that, although not explicitly described or shown herein, embody the principles described herein and are included within the scope of the claims that follow this description. Furthermore, any examples described herein are intended to aid in understanding the principles of the disclosure and are to be construed as being without limitation. As a result, this disclosure is not limited to the specific embodiments or examples described below, but by the claims and their equivalents.

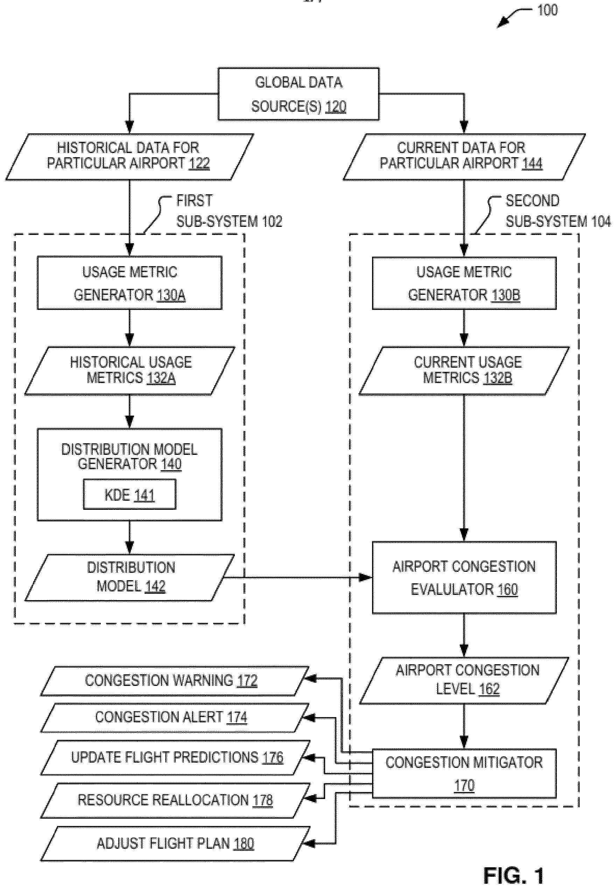

Particular examples are described herein with reference to the drawings. In the description, common features are designated by common reference numbers throughout the drawings. In some drawings, multiple instances of a particular type of feature are used. Although these features are physically and/or logically distinct, the same reference number is used for each, and the different instances are distinguished by addition of a letter to the reference number. When the features as a group or a type are referred to herein (e.g., when no particular one of the features is being referenced), the reference number is used without a distinguishing letter. However, when one particular feature of multiple features of the same type is referred to herein, the reference number is used with the distinguishing letter. For example, referring to FIG. 1, multiple usage metric generators are illustrated and associated with reference numbers 130A and 130B. When referring to a particular one of these usage metric generators, such as the usage metric generator 130A, the distinguishing letter "A" is used. However, when referring to any arbitrary one of these usage metric generators or to these usage metric generators as a group, the reference number 130 is used without a distinguishing letter.

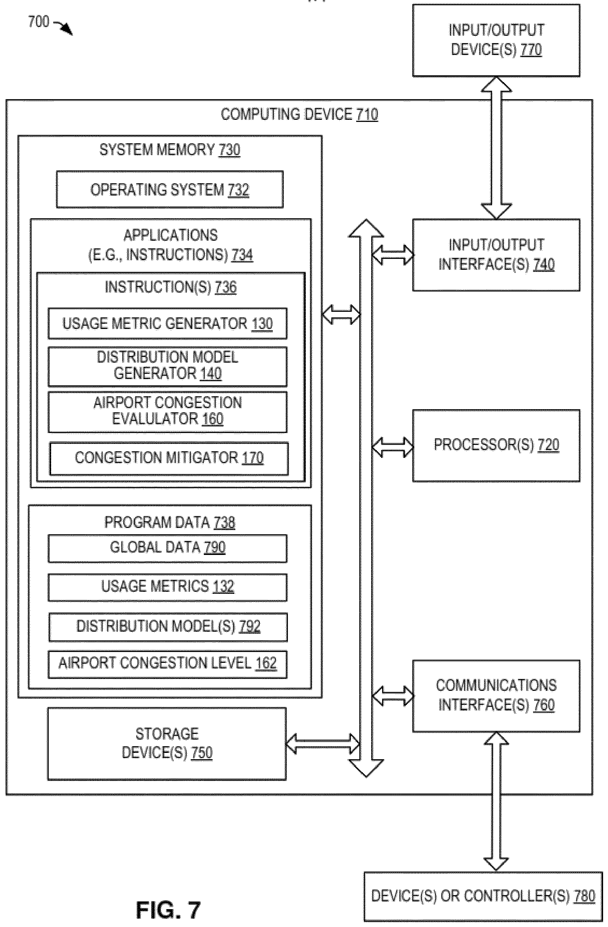

As used herein, various terminology is used for the purpose of describing particular examples and is not intended to be limiting. For example, the singular forms "a," "an," and "the" are intended to include the plural forms as well, unless the context clearly indicates otherwise. Further, some features described herein can be singular or plural. To illustrate, FIG. 7 depicts a device including one or more processors ("processor(s)" 720 in FIG. 7), which indicates that the device may include a single processor 720 or may include multiple processors 720. For ease of reference herein, such features are generally introduced as "one or more" features, and are subsequently referred to in the singular unless aspects related to multiple of the features are being described.

The terms "comprise," "comprises," and "comprising" are used interchangeably with "include," "includes," or "including." Additionally, the term "wherein" is used interchangeably with the term "where." As used herein, "exemplary" indicates an example, an implementation, and/or an aspect, and should not be construed as limiting or as indicating a preference or a preferred implementation. As used herein, an ordinal term (e.g., "first," "second," "third," etc.) used to modify an element, such as a structure, a component, an operation, etc., does not by itself indicate any priority or order of the element with respect to another element, but rather merely distinguishes the element from another element having a same name (but for use of the ordinal term). As used herein, the term "set" refers to a grouping of one or more elements, and the term "plurality" refers to multiple elements.

As used herein, "obtaining," "generating," "calculating," "using," "selecting," "accessing," and "determining" are interchangeable unless context indicates otherwise. For example, "obtaining," "generating," "calculating," or "determining" a parameter (or a signal) can refer to actively generating, calculating, or determining the parameter (or the signal) or can refer to using, selecting, or accessing the parameter (or signal) that is already generated, such as by another component or device. As used herein, a device that is "configured to" perform an operation includes dedicated circuitry, hardware, or other components that enable the operation to be performed by the device. As an example, programming of a general purpose processor with instructions that, when executed by the processor, cause the processor to perform a particular operation results in a special-purpose processor that is configured to perform that particular operation. A device can be configured to perform multiple operations. A device that is configured to perform an operation does not necessarily exclude the device from being configured to perform other operations.

As used herein, "coupled" can include "communicatively coupled," "electrically coupled," or "physically coupled," and can also (or alternatively) include any combinations thereof. Two devices (or components) can be coupled (e.g., communicatively coupled, electrically coupled, or physically coupled) directly or indirectly via one or more other devices, components, wires, buses, networks (e.g., a wired network, a wireless network, or a combination thereof), etc. Two devices (or components) that are electrically coupled can be included in the same device or in different devices and can be connected via electronics, one or more connectors, or inductive coupling, as illustrative, non-limiting examples. In some implementations, two devices (or components) that are communicatively coupled, such as in electrical communication, can send and receive electrical signals (digital signals or analog signals) directly or indirectly, such as via one or more wires, buses, networks, etc. As used herein, "directly coupled" is used to describe two devices that are coupled (e.g., communicatively coupled, electrically coupled, or physically coupled) without intervening components.

Referring to FIG. 1, a system 100 is illustrated including components associated with monitoring airport congestion. The system 100 includes a first sub-system 102 and a second sub-system 104 that are coupled to one or more global data sources 120. The global data source(s) 120 include one or more sources of global data associated with aircraft traffic. For example, the global data source(s) 120 may include an airport mapping database that provides map data regarding runways, taxiways, etc., of various airports, an aircraft tracking data source that provides position data (e.g., radar surveillance data) of aircraft in the vicinity of the airports, and a weather data source that provides current weather data, weather forecasts, or both, for the airports.

The first sub-system 102 is configured to obtain, from the global data source(s) 120, historical data 122 corresponding to historical usage metrics 132A for a particular airport and generate a distribution model 142 associated with usage of the particular airport. The first sub-system 102 includes a usage metric generator 130A coupled to a distribution model generator 140.

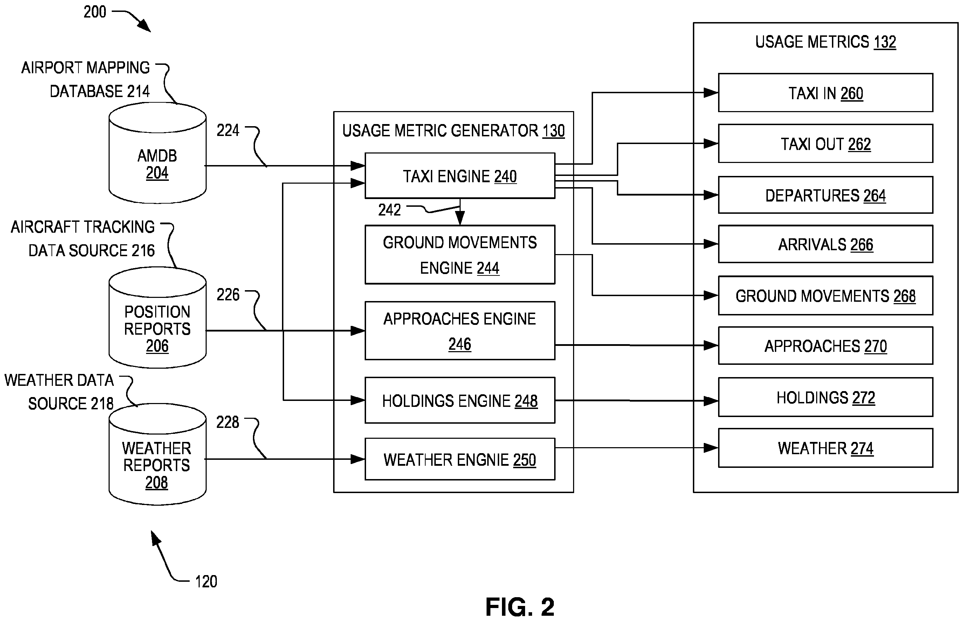

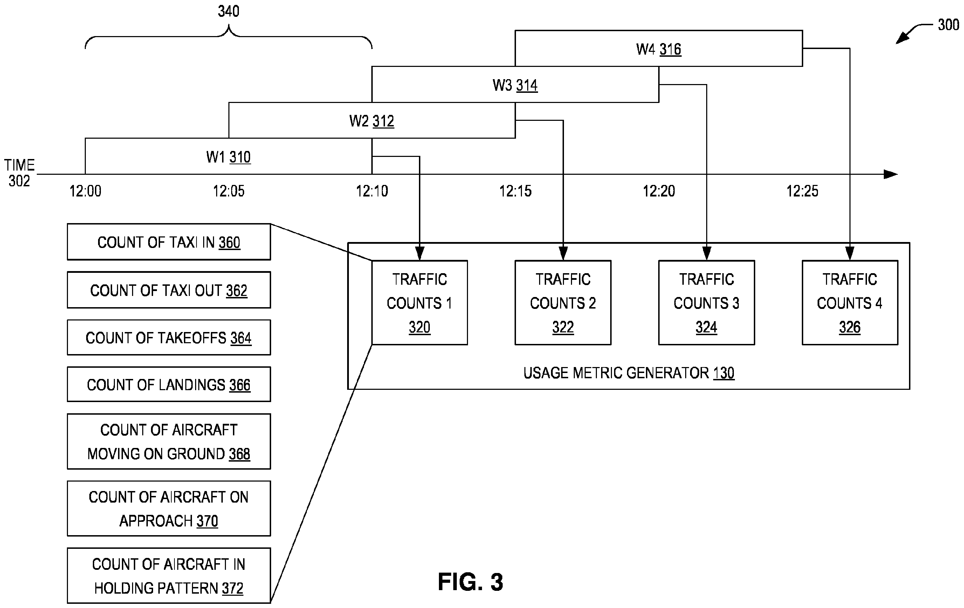

The usage metric generator 130A is configured to process the historical data 122 to obtain the historical usage metrics 132A for the particular airport. As described in further detail with reference to FIG. 2, the historical usage metrics 132A can include taxi-in data, taxi-out data, departures data, arrivals data, approaches data, ground movement data, weather data, aircraft holding data, or any combination thereof. For example, as described further with reference to FIGS. 2-3, the global data source(s) 120 can include an airport mapping database and an aircraft tracking data source, and the usage metric generator 130A can process data from the airport mapping database and from the aircraft tracking data source to determine, for a particular time interval at the particular airport, a count of aircraft that have landed, a count of aircraft that have taken off, a count of taxi operations for arriving aircraft, a count of taxi operations for departing aircraft, a count of aircraft moving on ground, a count of aircraft on approach that have not yet landed during the particular time interval at the particular airport, and a count of aircraft following a holding pattern during the particular time interval at the particular airport. Such historical usage metrics 132A can be generated for overlapping time intervals using a sliding window to enable enhanced accuracy of congestion estimates, as described further with reference to FIG. 3.

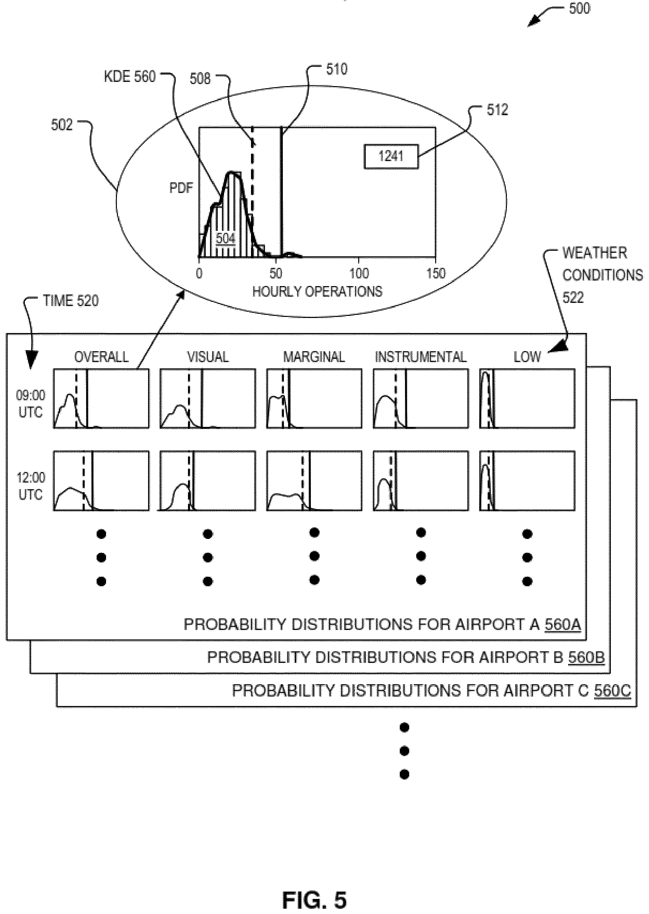

The distribution model generator 140 is configured to process the historical usage metrics 132A to generate the distribution model 142 associated with historical usage of the particular airport. The distribution model 142 corresponds to a kernel density estimator (KDE) model 141. As described in further detail with reference to FIG. 5, a probability density estimate associated with the KDE model 141 approximates a distribution (e.g., a histogram) of the historical usage metrics 132A and enables determination of a current level of congestion of an airport relative to the historical usage of the airport via relatively low-complexity statistical operations. In addition, using the KDE model 141 for estimating a current level of congestion consumes less processing resources, memory, and bandwidth as compared to using the raw data of the historical usage metrics 132A.

Although operation of the usage metric generator 130A and the distribution model generator 140 are described above for a single time interval for a single airport, it should be understood that the first sub-system 102 can process historical data corresponding to multiple time intervals and multiple airports to generate, for each of the airports, one or more sets of distribution models for each time interval. To illustrate, in some implementations the distribution model generator 140 is configured to generate, for each of the multiple airports, multiple distribution models 142 based on time of day and further based on weather condition, as described further with reference to FIG. 5.

The second sub-system 104 is configured to determine, based on the distribution model 142 for a particular airport and current data 144 corresponding to current usage metrics 132B for the particular airport, an airport congestion level 162 associated with the particular airport. The second sub-system 104 includes a usage metric generator 130B, an airport congestion evaluator 160, and a congestion mitigator 170.

The usage metric generator 130B is configured to process the current data 144 to obtain the current usage metrics 132B. For example, the current data 144 can include data associated with aircraft positions and weather conditions at the particular airport over a most recent time period, such as over the last hour, last half-hour, or last 10 minutes, as illustrative, non-limiting examples, and the usage metric generator 130B can process the current data 144 to generate the current usage metrics 132B for the most recent time period. The current usage metrics 132B include usage metrics that correspond to the historical usage metrics 132A to enable comparisons of current usage of an airport to historical usage of the airport. In an illustrative example, the current usage metrics 132B include one or more of taxi-in data, taxi-out data, departures data, arrivals data, approaches data, ground movement data, weather data, or aircraft holding data, as described previously for the historical usage metrics 132A.

The airport congestion evaluator 160 is configured to receive the distribution model 142 and the current usage metrics 132B for a particular airport and determine, based on the distribution model 142 and the current usage metrics 132B for the particular airport, an airport congestion level 162 for the particular airport. For example, in some implementations, the distribution model 142 includes data describing a probabilistic density function that indicates, for each value of a count of aircraft operations (e.g., the sum of aircraft arrivals and departures) over a particular time period, a relative probability associated with that count of aircraft operations based on historical counts of aircraft operations over the particular time period at that particular airport. The airport congestion evaluator 160 may generate a current count of aircraft operations based on the current usage metrics 132B and determine a percentile associated with the current count, such as by computing or approximating an integral of the probability distribution estimate over a range from zero to the current count. The airport congestion evaluator 160 may compare the determined percentile to one or more thresholds, such as a first threshold corresponding to the 95th percentile and/or a second threshold corresponding to the 99th percentile, to determine the airport congestion level 162.

In other implementations, the distribution model 142 does not include data describing the probabilistic density function and instead includes data that maps one or more count of operations to one or more congestion levels. For example, the distribution model generator 140 may determine which counts of operations correspond to the 95th percentile and the 99th percentile, and the distribution model 142 may provide the determined counts as the distribution model 142. To illustrate, the distribution model 142 may indicate that a count of 52 operations corresponds to the 95th percentile and that a count of 63 operations corresponds to the 99th percentile. In such implementations, the airport congestion evaluator 160 compares the current count of operations to the values indicated in the distribution model 142 to determine the airport congestion level 162.

The congestion mitigator 170 is configured to selectively initiate performance of a mitigation action based on a value of the airport congestion level 162. For example, in response to the airport congestion level 162 indicating that a threshold usage level has been exceeded, the congestion mitigator 170 performs a mitigation action. To illustrate, the congestion mitigator 170 may generate a congestion warning 172, generate a congestion alert 174, update one or more flight arrival or departure predictions 176 at the particular airport based on congestion at the particular airport, reallocate one or more resources 178 at the particular airport, adjust a flight plan 180 of an aircraft in flight to the particular airport to improve fuel efficiency of the aircraft, re-route an aircraft to avoid airspace of the particular airport, or any combination thereof.

In an example, the congestion mitigator 170 may generate the congestion warning 172 in response to the airport congestion level 162 exceeding a first threshold percentile of the distribution model 142. After the airport congestion level 162 has further increased to exceed a second threshold percentile of the distribution model 142 that is larger than the first threshold percentile, the congestion mitigator 170 may generate the congestion alert 174. Upon the airport congestion level 162 falling below the second threshold percentile, the second sub-system 104 (e.g., the congestion mitigator 170) may generate a notification that the airport congestion level 162 has fallen from an alert level to a warning level. Upon the airport congestion level 162 falling below the first threshold percentile, the second sub-system 104 (e.g., the congestion mitigator 170) may generate a notification that the airport congestion level 162 is no longer at a warning level.

During operation, the first sub-system 102 may operate as a back-end system that is configured to periodically (e.g., daily, weekly, or at some other interval) or occasionally update the multiple distribution models associated with each airport for which congestion monitoring is performed (e.g., including the distribution model 142) based on updated historical data. The first sub-system 102 may have a relatively larger amount of processing power as compared to the second sub-system 104, which may operate as a client system, such as an electronic flight pack (EFP) that a pilot can access in a cockpit to receive real-time or near-real-time updates on estimated airport congestion. The first sub-system 102 generates updated sets of the distribution models for various airports, time periods, and weather conditions, and may provide one or more distribution models 142 to the second sub-system 104. In some examples, the one or more distribution models 142 are provided to the second sub-system 104 on an as-scheduled or as-needed basis. To illustrate, when an aircraft is scheduled to arrive at one or more particular airports within one or more particular time ranges, the distribution models 142 associated with the particular airports and the particular time ranges may be provided to the second sub-system 104. In other examples, a full set or partial set of the distribution models 142 may be provided to the second sub-system 104, such as a full set of the distribution models 142 for all airports and all time periods for which congestion monitoring is performed.

The second sub-system 104 may periodically or occasionally access the global data source(s) 120 to generate real-time updates of the airport congestion level 162 for one or more destination airports associated with one or more scheduled flights. For example, the second sub-system 104 may be used by one or more airlines or one or more operational control centers (OCC) to implement system-wide monitoring and congestion mitigation, by individual pilots to perform individual airport monitoring and congestion mitigation for individual flights into or out of specific airports, or any combination thereof.

In some examples, by issuing the congestion warning 172, airport personnel and/or air traffic management systems can take proactive measures to reduce or mitigate the potential congestion, or potential effects of the congestion, at the airport. As an example, additional personnel may be placed on notice that they may be called into service to help alleviate the congestion.

In some examples, by issuing the congestion alert 174, airport personnel and/or air traffic management systems can take remedial measures to reduce or mitigate the congestion at the airport. As an example, additional personnel may be called into service to help alleviate the congestion.

By performing a mitigation action that includes updating of one or more flight arrival or departure predictions (e.g., update flight predictions 176), scheduling adjustments may be made to reflect expected delays due to increased airport congestion, and the adjusted flight predictions may be propagated through the schedule of arriving and departing flights at the airport to provide a more accurate schedule of flight operations for use by airport personnel, aircraft crews, and passengers.

By performing a mitigation action that includes reallocating one or more resources at the particular airport (e.g., resource reallocation 178), resources such as gate assignments, flight crews, ground staff and other resources associated with aircraft turnaround, etc., may be reallocated to reduce inefficiencies that are anticipated to occur due to delays arising as a result of airport congestion. For example, when airport congestion is expected to delay the arrival of a particular aircraft which, in turn, will cause an expected delay in the departure of that particular aircraft on a subsequent flight, resource allocation can include performing a tail swap in which a different aircraft is assigned to the subsequent flight to reduce or eliminate the expected delay in the departure of that flight.

By performing a mitigation action that includes adjusting a flight plan (e.g., adjust flight plan 180) of an aircraft in flight to the particular airport to improve fuel efficiency of the aircraft, an efficiency of the aircraft may be improved. For example, when the estimated congestion at the arrival airport is expected to result in the aircraft flying a holding pattern upon reaching the airport, the flight plan may be adjusted to reduce the speed of the aircraft, which can improve the fuel efficiency of the aircraft for the reminder of the flight as compared to following the initial flight plan, in addition to reducing the amount of time that the aircraft is in the holding pattern.

Although the first sub-system 102 and the second sub-system 104 may be implemented in separate devices, optionally the components associated with first sub-system 102 and the second sub-system 104 are included in a single device. For example, the single device can include one or more processors that include (or that are otherwise configured to perform operations associated with) a single usage metric generator 130 to generate the historical usage metrics 132A and the current usage metrics 132B, the distribution model generator 140, the airport congestion evaluator 160, and the congestion mitigator 170. Optionally, one or more of the components, such as the congestion mitigator 170, may be implemented in another sub-system, such as a scheduling or resource management sub-system that is in communication with the airport congestion evaluator 160 to receive indications of the airport congestion level 162.

Although the usage metric generator 130A, the usage metric generator 130B, the distribution model generator 140, the airport congestion evaluator 160, and the congestion mitigator 170 are illustrated as distinct components, optionally the functionality of two more of the usage metric generator 130A, the usage metric generator 130B, the distribution model generator 140, the airport congestion evaluator 160, and the congestion mitigator 170 can be combined into a single component.

Although the above examples describe congestion regions associated with thresholds corresponding to the 95th percentile and 99th percentile, such examples are provided for purposes of explanation and should not be considered limiting. For example, a first threshold may correspond to the 85th percentile, the 90th percentile, or any other percentile that is determined to be beneficial for warning of potential airport congestion. A second threshold may correspond to the 96th percentile, the 98th percentile, or any other percentile that is determined beneficial for warning of airport congestion. Optionally, as another example, a single threshold may be used, or three or more thresholds may be used, instead of the two thresholds in the above-described examples.

FIG. 2 is a diagram depicting an example of components 200 that may be included in the system 100 of FIG. 1, including the global data source(s) 120 and a usage metric generator 130.

The global data source(s) 120 include an airport mapping database 214, an aircraft tracking data source 216, and a weather data source 218. The airport mapping database 214 can include, or correspond to, one or more AMDB 204 storing data associated with one or more airports subject to congestion monitoring by the system 100. To illustrate, an AMDB 204 can include a dataset that represents the spatial layout of an airport in terms of features (e.g., runways, taxiways, parking stands) that may be described as points, lines, polygons, etc., in addition to other information such as surface types. In an example, the AMDB 204 includes data compliant with a geographic information system (GIS)-type format.

The aircraft tracking data source 216 can include, or correspond to, a source or collection of position reports 206. To illustrate, the aircraft tracking data source 216 can include an internet-based service that provides real-time commercial aircraft flight tracking information, origins and destinations, flight numbers, aircraft types, positions, altitudes, headings and speeds from one or more aggregated sources, such as a FLIGHTRADAR24-type service (FLIGHTRADAR24 is a trademark of Flightradar24 AB, Stockholm, Sweden).

The weather data source 218 can include, or correspond to, a collection of current weather reports 208. For example, the weather reports 208 can correspond to Meteorological Terminal Aviation Routine Weather Report (METAR)-type reports from airports, from weather observation stations, from one or more sources, or any combination thereof. Alternatively, or in addition, the weather reports 208 can correspond to terminal aerodrome forecast (TAF)-type forecast reports.

The usage metric generator 130 can correspond to the usage metric generator 130A of the first sub-system 102 of FIG. 1, the usage metric generator 130B of the second sub-system 104 of FIG. 1, or a combination thereof. The usage metric generator 130 outputs a set of usage metrics 132, such as the historical usage metrics 132A or the current usage metrics 132B of FIG. 1.

The usage metric generator 130 is configured to process data 224 from the airport mapping database 214, data 226 from the aircraft tracking data source 216, and data 228 from the weather data source 218 to generate the usage metrics 132. For example, the usage metric generator 130 is configured to determine, for a particular time interval at the particular airport, a count of aircraft that have landed, a count of aircraft that have taken off, a count of taxi operations for arriving aircraft, a count of taxi operations for departing aircraft, a count of aircraft moving on the ground, a count of aircraft on approach, and a count of aircraft in a holding pattern. In an example, the usage metric generator 130 is configured to determine the weather conditions during the particular time interval at the particular airport. The usage metric generator 130 includes a taxi engine 240, a ground movements engine 244, an approaches engine 246, a holdings engine 248, and a weather engine 250.

The taxi engine 240 is configured to process the data 224 from the airport mapping database 214 and the data 226 from the aircraft tracking data source 216 to generate several of the usage metrics 132, including taxi-in data 260, taxi-out data 262, departures data 264, and arrivals data 266. For example, the taxi engine 240 may compare positions and travel paths of individual aircraft in the vicinity of a particular airport to the runways and taxiways of the particular airport, as indicated in an airport map in the data 224 from the airport mapping database 214, to identify when each individual aircraft has landed, taken off, taxied in (e.g., traveled from the landing runway to an arrival gate during the time interval), taxied out (e.g., traveled from a departure gate to the departure (takeoff) runway, and/or engaged in other ground movements, during a particular time period.

The taxi engine 240 may determine, for the particular time period, a mean (e.g., average) taxi in time, a mean taxi out time, a count of aircraft that have landed, a count of aircraft that have taken off, a count of aircraft that have taxied in, a count of aircraft that have taxied out, and a total count of all aircraft that have taxied or otherwise moved on the ground during the particular time period. The mean taxi in time (or the count of aircraft that have taxied in) is output as the taxi-in data 260, and the mean taxi out time (or the count of aircraft that have taxied out) is output as the taxi-out data 262. The count of aircraft that have taken off is output as the departures data 264, and the count of aircraft that have landed is output as the arrivals data 266. The taxi engine 240 is also configured to provide taxi data 242 to the ground movements engine 244.

The ground movements engine 244 is configured to process the taxi data 242 to determine ground movement data 268 to be included in the usage metrics 132. For example, the taxi data 242 may include an indication of all aircraft movement that is detected in the airport map during the particular time interval. Based on the taxi data 242, the ground movements engine 244 calculates all aircraft movements that were detected moving and/or taxiing at the particular airport and outputs the total count of all aircraft engaging in ground movements as the ground movement data 268.

The approaches engine 246 is configured to process the data 226 from the aircraft tracking data source 216 to generate approaches data 270 that is included in the usage metrics 132. For example, the approaches engine 246 may determine a count of aircraft that, during the particular time interval, have not yet landed but are expected to land at the particular airport and are within a threshold distance, such as less than or equal to 100 nautical miles, from the particular airport.

The holdings engine 248 is configured to process the data 226 from the aircraft tracking data source 216 to generate aircraft holdings data 272 that is included in the usage metrics 132. For example, the holdings engine 248 may determine a count of aircraft that are following a holding pattern at the particular airport during the particular time period and may output the count of aircraft following the holding pattern as the aircraft holdings data 272.

The weather engine 250 is configured to process data 228 from the weather data source 218 to generate weather data 274 that is included in the usage metrics 132. For example, the weather engine 250 may decode and select fields from the METAR and/or TAF reports for the particular airport and for the particular time interval to collect information such as temperature, dewpoint, wind direction, wind speed, visibility, wind gust, one or more other types of weather information, or a combination thereof. One or more weather classes may be determined from the weather information and output as the weather data 274. In an illustrative, non-limiting implementation, the weather data 274 includes an indication of a visibility class from among the classes of: visual (e.g., visibility greater than 9656 meters), marginal visual (e.g., visibility in the range between 4828 and 9656 meters), instrumental (e.g., visibility in the range between 1609 and 4828 meters), and low instrumental (e.g., visibility less than 1609 meters).

Although the usage metric generator 130 is illustrated as including the taxi engine 240, the ground movements engine 244, the approaches engine 246, the holdings engine 248, and the weather engine 250, optionally the usage metric generator 130 omits one or more of the taxi engine 240, the ground movements engine 244, the approaches engine 246, the holdings engine 248, and the weather engine 250. For example, the functionality associated with two or more of the taxi engine 240, the ground movements engine 244, the approaches engine 246, the holdings engine 248, or the weather engine 250, may be combined into a single component. In another example, the usage metrics 132 may omit one or more values of the data 260-274, and the component(s) used to generate the data omitted from the usage metrics 132 may also be omitted from the usage metric generator 130.

FIG. 3 depicts an example of operations 300 that may be performed by the system 100 of FIG. 1. The operations 300 include the usage metric generator 130 generating one or more counts of traffic operations, which may correspond to the historical usage metrics 132A or the current usage metrics 132B, using a sliding window.

As illustrated, the usage metric generator 130 generates a first set of traffic counts 320 using a first sliding window (W1) 310, a second set of traffic counts 322 using a second sliding window (W2) 312, a third set of traffic counts 324 using a third sliding window (W3) 314, and a fourth set of traffic counts 326 using a fourth sliding window (W4) 316. Each of the sliding windows 310-316 is illustrated as spanning a respective 10 minute interval of time along a timeline 302, and the sliding windows 310-316 partially overlap each other.

For example, to determine the first set of traffic counts 320, the usage metric generator 130 processes the data 224 from the airport mapping database 214 and the data 226 from the aircraft tracking data source 216 to determine, for a particular time interval 340 at the particular airport, a count of aircraft that have landed (count of landings 366), a count of aircraft that have taken off (count of takeoffs 364), a count of taxi operations for arriving aircraft (count of taxi in 360), a count of taxi operations for departing aircraft (count of taxi out 362), and a count of aircraft moving on ground 368. The usage metric generator 130 also determines, based on the data 226 from the aircraft tracking data source 216, a count of aircraft on approach 370 that have not yet landed during the particular time interval 340 at the particular airport, and a count of aircraft following a holding pattern 372 during the particular time interval 340 at the particular airport. As illustrated, the particular time interval 340 is the 10-minute interval from 12:00 to 12:10.

To determine the second set of traffic counts 322, the usage metric generator 130 processes the data 224 from the airport mapping database 214 and the data 226 from the aircraft tracking data source 216 to determine values of the counts 360-372 for a second time interval associated with the second sliding window 312. The second time interval is the 10-minute interval from 12:05 to 12:15, which overlaps the second half of the time interval 340. Similarly, the usage metric generator 130 processes the data 224, 226 to determine values of the counts 360-372 for a third time interval associated with the third sliding window 314, corresponding to the 10-minute interval from 12:10 to 12:20, and to determine values of the counts 360-372 for a fourth time interval associated with the fourth sliding window 316, corresponding to the 10-minute interval from 12:15 to 12:25.

One benefit provided by using overlapping sliding windows is that the granularity of the start time (e.g., 5 minute increments as illustrated in FIG. 3) may be smaller than the length of the sliding windows (e.g., 10 minute time intervals). Reducing the granularity of the start time can provide enhanced accuracy for real-time congestion monitoring, while having longer time intervals can smooth out variability associated with low numbers of events per time period.

Although FIG. 3 depicts that each of the traffic counts 320-326 is computed for 10-minute intervals at each 5-minute increment, in other examples any other time interval length (e.g., 15 minutes, 30 minutes, 1 hour, etc.), any other start increment (e.g., 10 minutes, 15 minutes, 20 minutes, etc.), or a combination thereof, may be used.

The same sliding windows 310-316 may be used for generating both the historical usage metrics 132A and the current usage metrics 132B. Optionally, however, different sliding windows may be used for generating the historical usage metrics 132A than for generating the current usage metrics 132B. For example, the historical usage metrics 132A may be generated using sliding windows having a length of one hour, while the current usage metrics 132B may be generated using sliding windows having a length of 15 minutes. In such an example, an adjustment may be made due to the difference in the traffic counts detected in the historical usage metrics 132A using a longer time period as compared to the traffic counts detected in the current usage metrics 132B using a shorter time period, such as by multiplying the current usage metrics 132B by a factor of 4 in the present example.

Although FIG. 3 depicts four sliding windows 310-316 spanning the time period from 12:00 to 12:25, it should be understood that such an arrangement of overlapping sliding windows, and the corresponding generation of traffic counts associated with the sliding windows, may be extended to cover an entire 24-hour period.

Although the use of sliding windows provides benefits in terms of enhanced accuracy due to relatively smaller increments and smoothing of the traffic counts due to relatively larger time intervals as described above, in other implementations the traffic counts 320-326 may be generated based on non-overlapping time intervals associated with non-overlapping sliding windows. Such implementations can reduce the amount of computational resources and storage associated with generation and storage of traffic counts as compared to using overlapping windows.

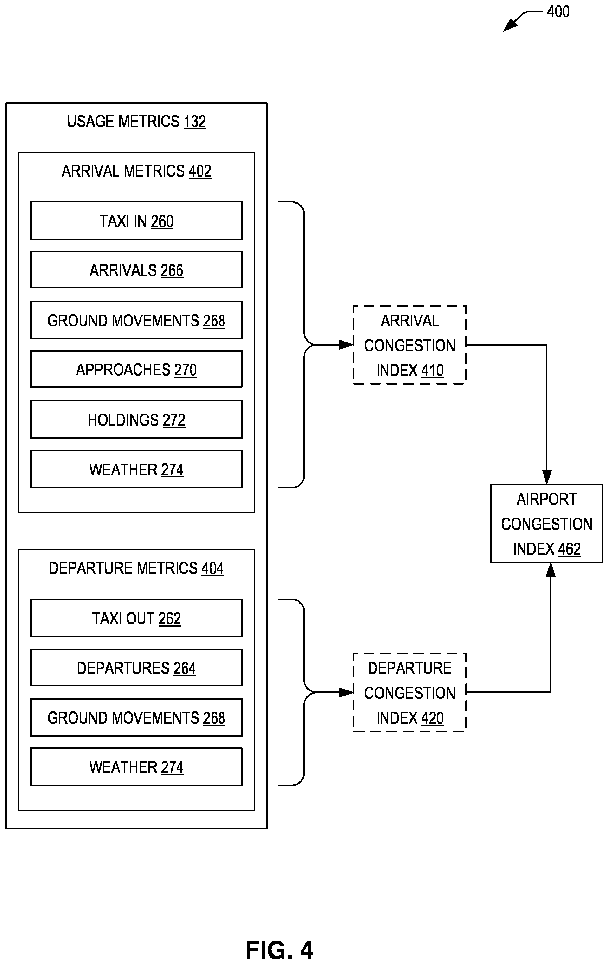

FIG. 4 depicts an example of operations 400 that may be performed by the system 100 of FIG. 1, such as by the airport congestion evaluator 160 of FIG. 1.

In FIG. 4, the usage metrics 132 (e.g., the current usage metrics 132B) are each categorized as arrival metrics 402, departure metrics 404, or both. The arrival metrics 402 include the taxi-in data 260, the arrivals data 266, the ground movement data 268, the approaches data 270, the aircraft holdings data 272, and the weather data 274. The departure metrics 404 include the taxi-out data 262, the departures data 264, the ground movement data 268, and the weather data 274.

In some implementations, the arrival metrics 402 are used to determine an arrival congestion index 410 and the departure metrics 404 are used to determine a departure congestion index 420. For example, the arrival congestion index 410 may be determined by summing a count of aircraft that taxied in (from the taxi in data 260), a count of landing aircraft (from the arrivals data 266), a count of aircraft that performed ground movements associated with travel from an arrival runway toward an arrival gate (from the ground movement data 268), a count of aircraft on approach (from the approaches data 270), and a count of aircraft in a holding pattern (from the aircraft holdings data 272), over a particular time period. The sum may be normalized (e.g., set to a value from 0 to 1) based on historical usage metrics 132A associated with the same time period, the same airport, and the same weather condition as indicated by the weather data 274, to generate the arrival congestion index 410.

Similarly, the departure congestion index 420 may be determined by summing a count of aircraft that taxied out (from the taxi out data 262), a count of departing aircraft (from the departures data 264), and a count of aircraft that performed ground movements associated with travel from a departure gate to a takeoff runway (from the ground movement data 268) over the particular time period. The sum may be normalized (e.g., set to a value from 0 to 1) based on historical usage metrics 132A associated with the same time period, the same airport, and the same weather condition as indicated by the weather data 274, to generate the departure congestion index 420. The arrival congestion index 410 and the departure congestion index 420 may be processed to determine the airport congestion index 462, such as based on subtracting the departure congestion index 420 from the arrival congestion index 410, determining a ratio of the arrival congestion index 410 to the departure congestion index 420 (e.g., dividing the arrival congestion index 410 by the departure congestion index 420), one or more other operations, or any combination thereof.

In other implementations, one or more of the arrival metrics 402 and the departure metrics 404 are used to determine the airport congestion index 462 without generating the arrival congestion index 410 and the departure congestion index 420. In a first example, a count of arrivals indicated by the arrivals data 266 can be added to a count of departures indicated by the departures data 264 to generate a sum of arrivals and departures for a particular time period. The sum of arrivals and departures can be used to determine the airport congestion index 462. In a second example, the airport congestion index 462 can be determined based on a sum of the count of arrivals indicated by the arrivals data 266, the count of departures indicated by the departures data 264, and one or more of: a count of aircraft taxiing in indicated by the taxi-in data 260, a count of aircraft taxiing out indicated by the taxi-out data 262, a count of aircraft moving on the ground indicated by the ground movement data 268, a count of approaches indicated by the approaches data 270, or a count of aircraft in a holding pattern indicated by the aircraft holdings data 272.

In the first and second example described above, the usage metrics 132 are used to generate a single-dimensional value, i.e., a count, and the airport congestion evaluator 160 can determine the airport congestion index 462 based on determining a percentile associated with the count based on a univariate probability density function, such as a univariate KDE model 141, corresponding to the distribution model 142. Alternatively, in a third example, the usage metrics 132 are used to generate a multi-dimensional value. For example, a first dimension can correspond to the sum of the count of arrivals indicated by the arrivals data 266 and the count of departures indicated by the departures data 264; a second dimension can correspond to a sum of the count of aircraft taxiing in indicated by the taxi-in data 260, the count of aircraft taxiing out indicated by the taxi-out data 262, the count of aircraft moving on the ground indicated by the ground movement data 268, and the count of aircraft undergoing ground operations indicated by the ground operations data 468; and a third dimension can correspond to a sum of the count of aircraft on approach or in a holding pattern, as indicated by the approaches data 270 and the aircraft holdings data 272, respectively. The airport congestion evaluator 160 can determine the airport congestion index 462 based on determining a percentile associated with the multi-dimensional value based on a multivariate probability density function, such as a multivariate KDE model 141, corresponding to the distribution model 142.

FIG. 5 depicts an example 500 of probability distributions that may be generated by the system 100 of FIG. 1. For example, multiple distribution models 560 may be generated by the distribution model generator 140 for each of multiple airports, including multiple distribution models 560A for airport "A," multiple distribution models 560B for airport "B," and multiple distribution models 560C for airport "C." The multiple distribution models 560 are each based on a respective time 520 (e.g., a time of day). To illustrate, a first set of probability distributions 560A for airport A corresponds to probability density functions for each of multiple times 520 (e.g., 09:00 Coordinated Universal Time (UTC), 12:00 UTC, etc.). Each of the multiple times 520 corresponds to a time interval associated with a respective sliding window of FIG. 3 that is used to determine traffic counts associated with that time interval. In the example 500, one-hour time intervals are used, and only 10 of the hourly distribution models are illustrated; however, it should be understood that other time intervals may be used in other examples, such as sets of distribution models generated using the 10-minute time intervals and the 5-minute increments associated with the sliding windows 310-316 of FIG. 3, and distribution models may be generated for every increment of an entire 24-hour period.

The first set of probability distributions 560A are further based on weather conditions 522. To illustrate, five probability density functions are illustrated for 09:00 UTC and labelled based on visibility conditions, including "Overall" (e.g., all visibility conditions combined), "Visual," "Marginal," "Instrumental," and "Low." The Visual, Marginal, Instrumental, and Low visibility conditions may correspond to the visibility classes described previously as included in the weather data 274, e.g., visual (e.g., visibility larger than 9656 meters), marginal visual (e.g., visibility in the range between 4828 and 9656 meters), instrumental (e.g., visibility in the range between 1609 and 4828 meters), and low instrumental (e.g., visibility lower than 1609 meters).

An example distribution 502 graphically illustrates a KDE model 560 (e.g., a probability density function) fitted to a histogram 504. The histogram 504 represents a distribution of historic counts of hourly operations that occurred during the associated time 520 (e.g., at 09:00 UTC) on previous days, at airport A, under all visibility conditions. In some implementations, the KDE model 560 applies more weight to more recent historical data than to older historical data so that more recent counts of hourly operations are modeled as being as more likely than less recent counts of hourly operations. A dashed vertical line represents a first KDE threshold percentile 508, such as 95th percentile, and a solid vertical line represents a second KDE threshold percentile 510, such as a 99th percentile. A total count of hourly operations detected in the historical data and represented in the histogram 504 that occurred during the associated time 520 (e.g., at 09:00 UTC) on previous days, at airport A, under all visibility conditions, is depicted as an operations count 512. It should be understood that the example distribution 502 is depicted in graphical form for purposes of explanation; in general, the probability distributions 560 can be maintained as data sets, data structures, or other formats for efficient computer-based access and processing, and may not necessarily be accessible in graphical form. However, in some implementations, a system such as the system 100 of FIG. 1 may include or may be coupled to a display device that provides a graphical indication of the current count of hourly operations in conjunction with (e.g., overlaid upon) a graphical representation of one or more of the probability distributions 560 to provide visual information regarding the current amount of congestion at a particular airport in relation to the historical distribution(s).

The airport congestion evaluator 160 of FIG. 1 may determine the airport congestion level 162 by comparing a count of operations associated with the current usage metrics 132B to the historical counts of hourly operations (horizontal axis values) associated with the threshold percentiles 508 and 510. In the example 502, the first threshold percentile 508 corresponds to 37 hourly operations, and the second threshold percentile 510 corresponds to 54 hourly operations. In the context of the example 502, an "hourly operations" value represents a sum of arrivals and departures occurring at the airport during the hour-long interval from 09:00 UTC to 10:00 UTC, and the height of each bar of the histogram 504 indicates how many times in the historical data that particular number of hourly operations occurred. However, in other examples, each "hourly operation" may instead represent a sum of one or more additional arrival and/or departure operations (e.g., arrivals, taxi in, approaches, holdings, departures, taxi out, etc.) occurring at the airport during the hour-long interval from 09:00 UTC to 10:00 UTC.

The airport congestion evaluator 160 of FIG. 1 may determine the airport congestion level 162 as a numerical value, such as a KDE percentile associated with a current count of hourly operations associated with current usage metrics. Alternatively or additionally, the airport congestion evaluator 160 of FIG. 1 may determine the airport congestion level 162 as a congestion category, such as "uncongested" when the current count of hourly operations is to the left of the dashed line indicating the first threshold percentile 508 (e.g., less than 37 hourly operations), a "warning" category when the current count of hourly operations is between the dashed line indicating the first threshold percentile 508 and the solid line indicating the second threshold percentile 510 (e.g., 37 to 53 hourly operations), or a "congested" category when the current count of hourly operations is to the right of the solid line indicating the second threshold percentile 510 (e.g., 53 or more hourly operations). The congestion mitigator 170 may generate the congestion warning 172 in response to the airport congestion level 162 exceeding a first threshold percentile 508 of the distribution model 142 and may generate the congestion alert 174 in response to the airport congestion level 162 exceeding a second threshold percentile 510 of the distribution model 142.

Although the distribution models 560 are described as univariate (e.g., a single count of operations), it should be understood that in other examples the distribution models 560 may be multivariate (e.g., multivariate KDE models) that correspond to a multi-dimensional histogram. In such examples, instead of a curve that represents the underlying one-dimensional histogram (e.g., the histogram 504), each of the distribution models 560 defines a surface that approximates the underlying multi-dimensional histogram.

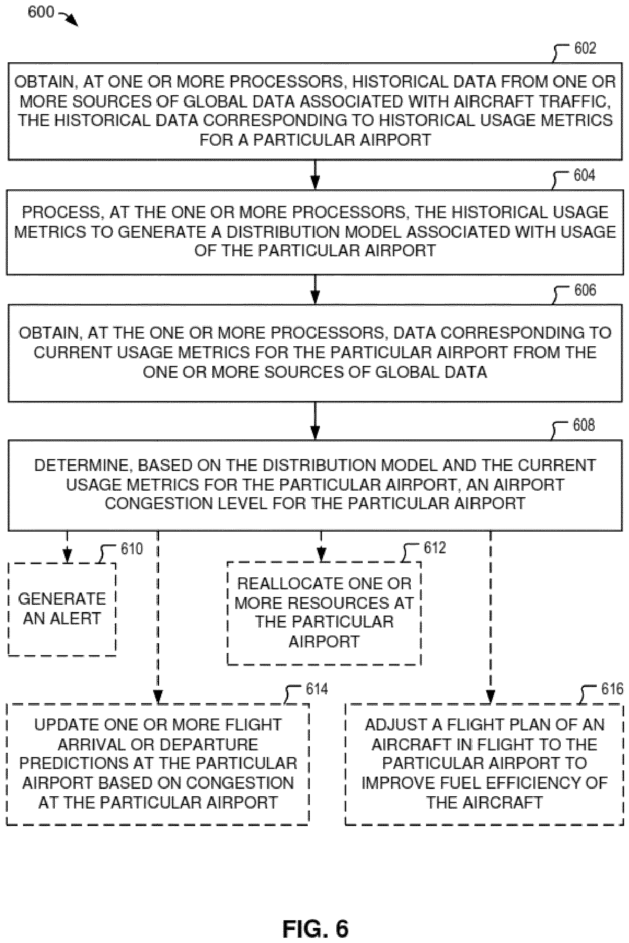

FIG. 6 is a flowchart illustrating a method 600 of monitoring airport congestion. In a particular implementation, the method 600 is performed by the usage metric generator(s) 130, the distribution model generator 140, the airport congestion evaluator 160, the congestion mitigator 170, or a combination thereof.

The method 600 includes, at block 602, obtaining, at one or more processors, historical data from one or more sources of global data associated with aircraft traffic. The historical data corresponds to historical usage metrics for a particular airport. For example, the usage metric generator 130A receives the historical data 122 from the global data source(s) 120 and generates the historical usage metrics 132A based on the historical data 122. In an example, the one or more sources of global data include an airport mapping database, an aircraft tracking data source, and a weather data source, such as the airport mapping database 214, the aircraft tracking data source 216, and the weather data source 218, respectively, of FIG. 2.

The method 600 includes, at block 604, processing, at the one or more processors, the historical usage metrics to generate a distribution model associated with usage of the particular airport. For example, the distribution model generator 140 processes the historical usage metrics 132A to generate the distribution model 142.

The method 600 includes, at block 606, obtaining, at the one or more processors, data corresponding to current usage metrics for the particular airport from the one or more sources of global data. For example, the usage metric generator 130B receives the current data 144 from the global data source(s) 120 and processes the current data 144 to generate the current usage metrics 132B.

The method 600 includes, at block 608, determining, based on the distribution model and the current usage metrics for the particular airport, an airport congestion level for the particular airport. For example, the airport congestion evaluator 160 determines the airport congestion level 162 based on the distribution model 142 and the current usage metrics 132B.

The method 600 optionally includes one or more actions that may be performed by the congestion mitigator 170 in response to the airport congestion level 162 corresponding to a KDE percentile that exceeds a threshold percentile for a congestion condition, such as described with reference to FIG. 5. To illustrate, the method 600 optionally includes generating an alert, such as the congestion alert 174 of FIG. 1, at block 610; reallocating one or more resources at the particular airport, such as the resource reallocation 178 of FIG. 1, at block 612; updating one or more flight arrival or departure predictions at the particular airport based on congestion at the particular airport, such as the update flight predictions 176 of FIG. 1, at block 614; and/or adjusting a flight plan of an aircraft in flight to the particular airport to improve fuel efficiency of the aircraft, such as the adjust flight plan 180 of FIG, 1, at block 616.

The method 600 thus enables determination of an amount of congestion at a particular airport using globally available public data. As a result, the method 600 enables mitigation actions to be taken to reduce the effects of congestion at individual airports, for individual flights, for fleets of aircrafts operated by one or more airlines, or for an air traffic management system, as illustrative, non-limiting examples.

FIG. 7 is a block diagram of a computing environment 700 including a computing device 710 configured to support aspects of computer-implemented methods and computer-executable program instructions (or code) according to the present disclosure. For example, the computing device 710, or portions thereof, is configured to execute instructions to initiate, perform, or control one or more operations described with reference to FIGS. 1-6. In some implementations, the computing device 710 corresponds to the first sub-system 102, the second sub-system 104, or a combination of the first sub-system 102 and the second sub-system 104.

The computing device 710 includes the one or more processors 720. The one or more processors 720 are configured to communicate with system memory 730, one or more storage devices 750, one or more input/output interfaces 740, one or more communications interfaces 760, or any combination thereof. The system memory 730 includes volatile memory devices (e.g., random access memory (RAM) devices), nonvolatile memory devices (e.g., read-only memory (ROM) devices, programmable read-only memory, and flash memory), or both. The system memory 730 stores an operating system 732, which may include a basic input/output system for booting the computing device 710 as well as a full operating system to enable the computing device 710 to interact with users, other programs, and other devices. The system memory 730 stores system (program) data 738, such as global data 790 from the global data source(s) 120 (e.g., the historical data 122 and/or the current data 144), the usage metrics 132, one or more distribution models 792, such as the distribution model 142 and/or the distribution models 560, the airport congestion level 162, or a combination thereof.

The system memory 730 includes one or more applications 734 (e.g., sets of instructions) executable by the one or more processors 720. As an example, the one or more applications 734 include instructions executable by the one or more processors 720 to initiate, control, or perform one or more operations described with reference to FIGS. 1-6. To illustrate, the one or more applications 734 include instructions executable by the one or more processors 720 to initiate, control, or perform one or more operations described with reference to the usage metric generator(s) 130, the distribution model generator 140, the airport congestion evaluator 160, the congestion mitigator 170, or a combination thereof.

The system memory 730 includes a non-transitory, computer readable medium storing the instructions that, when executed by the one or more processors 720, cause the one or more processors 720 to obtain, from one or more sources of global data associated with aircraft traffic, historical data corresponding to historical usage metrics for a particular airport, process the historical usage metrics to generate a distribution model associated with usage of the particular airport, obtain, from the one or more sources of global data, data corresponding to current usage metrics for the particular airport, and determine, based on the distribution model and the current usage metrics for the particular airport, an airport congestion level for the particular airport.

The one or more storage devices 750 include nonvolatile storage devices, such as magnetic disks, optical disks, or flash memory devices. In a particular example, the storage devices 750 include both removable and non-removable memory devices. The storage devices 750 are configured to store an operating system, images of operating systems, applications (e.g., one or more of the applications 734), and program data (e.g., the program data 738). In a particular aspect, the system memory 730, the storage devices 750, or both, include tangible computer-readable media. In a particular aspect, one or more of the storage devices 750 are external to the computing device 710.

The one or more input/output interfaces 740 enable the computing device 710 to communicate with one or more input/output devices 770 to facilitate user interaction. For example, the one or more input/output interfaces 740 can include a display interface, an input interface, or both. For example, the input/output interface 740 is adapted to receive input from a user, to receive input from another computing device, or a combination thereof. The input/output interface 740 may conform to one or more standard interface protocols, including serial interfaces (e.g., universal serial bus (USB) interfaces or Institute of Electrical and Electronics Engineers (IEEE) interface standards), parallel interfaces, display adapters, audio adapters, or custom interfaces ("IEEE" is a registered trademark of The Institute of Electrical and Electronics Engineers, Inc. of Piscataway, New Jersey). The input/output devices 770 may include one or more user interface devices and displays, including some combination of buttons, keyboards, pointing devices, displays, speakers, microphones, touch screens, and other devices.

The one or more processors 720 are configured to communicate with one or more devices (or controllers) 780 via the one or more communications interfaces 760. For example, the one or more communications interfaces 760 can include a network interface. The one or more devices 780 can include, for example, the global data source(s) 120, such as the airport mapping database 214, the aircraft tracking data source 216, and the weather data source 218 of FIG. 2. In an example, the applications 734 can include one of the first sub-system 102 or the second sub-system 104, and the one or more devices 780 can include the other of the first sub-system 102 or the second sub-system 104. In an example, the applications 734 can include one of the airport congestion evaluator 160 or the congestion mitigator 170, and the one or more devices 780 can include the other of the airport congestion evaluator 160 or the congestion mitigator 170.

In conjunction with the described systems and methods, an apparatus is disclosed that includes means for obtaining historical data from one or more sources of global data associated with aircraft traffic, the historical data corresponding to historical usage metrics for a particular airport. The means for obtaining historical data from one or more sources of global data corresponds to the system 100, the first sub-system 102, the usage metric generator 130A, the device 710, the input/output device 770, the processor(s) 720, one or more other circuits or devices configured to obtain historical data from one or more sources of global data, or a combination thereof.

The apparatus includes means for processing the historical usage metrics to generate a distribution model associated with usage of the particular airport. The means for processing the historical usage metrics to generate a distribution model associated with usage of the particular airport corresponds to the system 100, the first sub-system 102, the distribution model generator 140, the device 710, the processor(s) 720, one or more other circuits or devices configured to process the historical usage metrics to generate a distribution model associated with usage of the particular airport or a combination thereof.

The apparatus includes means for obtaining data corresponding to current usage metrics for the particular airport from the one or more sources of global data. The means for obtaining data corresponding to current usage metrics corresponds to the system 100, the second sub-system 104, the usage metric generator 130B, the device 710, the processor(s) 720, one or more other circuits or devices configured to obtain data corresponding to current usage metrics for the particular airport from the one or more sources of global data or a combination thereof.

The apparatus also includes means for determining, based on the distribution model and the current usage metrics for the particular airport, an airport congestion level for the particular airport. The means for determining, based on the distribution model and the current usage metrics for the particular airport, an airport congestion level for the particular airport corresponds to the system 100, the second sub-system 104, the airport congestion evaluator 160, the device 710, the processor(s) 720, one or more other circuits or devices configured to determine, based on the distribution model and the current usage metrics for the particular airport, an airport congestion level for the particular airport, or a combination thereof.

A non-transitory, computer readable medium can store instructions that, when executed by one or more processors, cause the one or more processors to initiate, perform, or control operations to perform part or all of the functionality described above. For example, the instructions may be executable to implement one or more of the operations or methods of FIGS. 1-7. Part or all of one or more of the operations or methods of FIGS. 1-7 may be implemented by one or more processors (e.g., one or more central processing units (CPUs), one or more graphics processing units (GPUs), one or more neural processing units (NPUs), one or more digital signal processors (DSPs)) executing instructions, by dedicated hardware circuitry, or any combination thereof.

Particular aspects of the disclosure are described below in a first set of interrelated Examples:
According to Example 1, a device includes one or more processors configured to: obtain, from one or more sources of global data associated with aircraft traffic, historical data corresponding to historical usage metrics for a particular airport; process the historical usage metrics to generate a distribution model associated with usage of the particular airport; obtain, from the one or more sources of global data, data corresponding to current usage metrics for the particular airport; and determine, based on the distribution model and the current usage metrics for the particular airport, an airport congestion level for the particular airport.
Example 2 includes the device of Example 1, wherein the distribution model corresponds to a kernel density estimator (KDE) model.
Example 3 includes the device of Example 1 or Example 2, wherein the one or more sources of global data include an airport mapping database, an aircraft tracking data source, and a weather data source.
Example 4 includes the device of any of Examples 1 to 3, wherein the historical usage metrics include one or more of: taxi-in data, taxi-out data, departures data, arrivals data, approaches data, ground movement data, weather data, or aircraft holding data.
Example 5 includes the device of any of Examples 1 to 4, wherein the data corresponding to the current usage metrics includes one or more of: taxi-in data, taxi-out data, departures data, arrivals data, approaches data, ground movement data, weather data, or aircraft holding data.
Example 6 includes the device of any of Examples 1 to 5, wherein the one or more processors are configured to process data from an airport mapping database and data from an aircraft tracking data source of the one or more sources of global data to determine, for a particular time interval at the particular airport, a count of aircraft that have landed, a count of aircraft that have taken off, a count of taxi operations for arriving aircraft, a count of taxi operations for departing aircraft, and a count of aircraft moving on ground.
Example 7 includes the device of Example 6, wherein the one or more processors are further configured to determine, based on the data from the aircraft tracking data source, a count of aircraft on approach that have not yet landed during the particular time interval at the particular airport.
Example 8 includes the device of Example 6 or Example 7, wherein the one or more processors are further configured to determine, based on the data from the aircraft tracking data source, a count of aircraft following a holding pattern during the particular time interval at the particular airport.
Example 9 includes the device of any of Examples 1 to 8, wherein one or more of the historical usage metrics or the current usage metrics are generated using a sliding window.
Example 10 includes the device of any of Examples 1 to 9, wherein the one or more processors are further configured to: process the current usage metrics to generate a current arrival congestion index and a current departure congestion index; and determine the airport congestion level based on the current arrival congestion index, the current departure congestion index, and the distribution model.
Example 11 includes the device of any of Examples 1 to 10, wherein the one or more processors are configured to generate, for each of multiple airports, multiple distribution models based on time of day.
Example 12 includes the device of Example 11, wherein the multiple distribution models are further based on weather condition.
Example 13 includes the device of Example 11 or Example 12, wherein the one or more processors are configured to periodically update the multiple distribution models based on updated historical data.
Example 14 includes the device of any of Examples 1 to 13, wherein the one or more processors are further configured to, in response to the airport congestion level exceeding a threshold percentile of the distribution model, perform a mitigation action including one or more of: generate an alert; update one or more flight arrival or departure predictions at the particular airport based on congestion at the particular airport; or reallocate one or more resources at the particular airport.
Example 15 includes the device of any of Examples 1 to 14, wherein the one or more processors are further configured to, in response to the airport congestion level exceeding a threshold percentile of the distribution model, adjust a flight plan of an aircraft in flight to the particular airport to improve fuel efficiency of the aircraft.
Example 16 includes the device of any of Examples 1 to 15, wherein the one or more processors are configured to: generate a congestion warning in response to the airport congestion level exceeding a first threshold percentile of the distribution model; and generate a congestion alert in response to the airport congestion level exceeding a second threshold percentile of the distribution model, wherein the second threshold percentile is larger than the first threshold percentile.
According to Example 17, a method includes: obtaining, at one or more processors, historical data from one or more sources of global data associated with aircraft traffic, the historical data corresponding to historical usage metrics for a particular airport; processing, at the one or more processors, the historical usage metrics to generate a distribution model associated with usage of the particular airport; obtaining, at the one or more processors, data corresponding to current usage metrics for the particular airport from the one or more sources of global data; and determining, based on the distribution model and the current usage metrics for the particular airport, an airport congestion level for the particular airport.
Example 18 includes the method of Example 17, wherein the one or more sources of global data include an airport mapping database, an aircraft tracking data source, and a weather data source.
Example 19 includes the method of Example 17 or Example 18, further including, in response to the airport congestion level exceeding a threshold percentile of the distribution model, one or more of: generating an alert; updating one or more flight arrival or departure predictions at the particular airport based on congestion at the particular airport; reallocating one or more resources at the particular airport; or adjusting a flight plan of an aircraft in flight to the particular airport to improve fuel efficiency of the aircraft.
Example 20 includes the method of any of Examples 17 to 19, wherein the distribution model corresponds to a kernel density estimator (KDE) model.
Example 21 includes the method of any of Examples 17 to 20, wherein the one or more sources of global data include an airport mapping database, an aircraft tracking data source, and a weather data source.
Example 22 includes the method of any of Examples 17 to 21, wherein the historical usage metrics include one or more of: taxi-in data, taxi-out data, departures data, arrivals data, approaches data, ground movement data, weather data, or aircraft holding data.
Example 23 includes the method of any of Examples 17 to 22, wherein the data corresponding to the current usage metrics includes one or more of: taxi-in data, taxi-out data, departures data, arrivals data, approaches data, ground movement data, weather data, or aircraft holding data.
Example 24 includes the method of any of Examples 17 to 23, further comprising processing data from an airport mapping database and data from an aircraft tracking data source of the one or more sources of global data to determine, for a particular time interval at the particular airport, a count of aircraft that have landed, a count of aircraft that have taken off, a count of taxi operations for arriving aircraft, a count of taxi operations for departing aircraft, and a count of aircraft moving on ground.
Example 25 includes the method of Example 24, further comprising determining, based on the data from the aircraft tracking data source, a count of aircraft on approach that have not yet landed during the particular time interval at the particular airport.
Example 26 includes the method of Example 24 or Example 25, further comprising determining, based on the data from the aircraft tracking data source, a count of aircraft following a holding pattern during the particular time interval at the particular airport.
Example 27 includes the method of any of Examples 17 to 26, wherein one or more of the historical usage metrics or the current usage metrics are generated using a sliding window.
Example 28 includes the method of any of Examples 17 to 27, further comprising: processing the current usage metrics to generate a current arrival congestion index and a current departure congestion index; and determining the airport congestion level based on the current arrival congestion index, the current departure congestion index, and the distribution model.
Example 29 includes the method of any of Examples 17 to 28, wherein multiple distribution models are generated for each of multiple airports based on time of day.
Example 30 includes the method of Example 29, wherein the multiple distribution models are further based on weather condition.
Example 31 includes the method of Example 29 or Example 30, further comprising periodically updating the multiple distribution models based on updated historical data.
Example 32 includes the method of any of Examples 17 to 31, further comprising, in response to the airport congestion level exceeding a threshold percentile of the distribution model, performing a mitigation action including one or more of: generating an alert; updating one or more flight arrival or departure predictions at the particular airport based on congestion at the particular airport; or reallocating one or more resources at the particular airport.
Example 33 includes the method of any of Examples 17 to 32, further comprising, in response to the airport congestion level exceeding a threshold percentile of the distribution model, adjusting a flight plan of an aircraft in flight to the particular airport to improve fuel efficiency of the aircraft.
Example 34 includes the method of any of Examples 17 to 33, further comprising: generating a congestion warning in response to the airport congestion level exceeding a first threshold percentile of the distribution model; and generating a congestion alert in response to the airport congestion level exceeding a second threshold percentile of the distribution model, wherein the second threshold percentile is larger than the first threshold percentile.
According to Example 35, a non-transitory computer readable medium stores instructions that, when executed by one or more processors, cause the one or more processors to: obtain, from one or more sources of global data associated with aircraft traffic, historical data corresponding to historical usage metrics for a particular airport; process the historical usage metrics to generate a distribution model associated with usage of the particular airport; obtain, from the one or more sources of global data, data corresponding to current usage metrics for the particular airport; and determine, based on the distribution model and the current usage metrics for the particular airport, an airport congestion level for the particular airport.
Example 36 includes the non-transitory computer readable medium of Example 35, wherein the one or more sources of global data include an airport mapping database, an aircraft tracking data source, and a weather data source.
Example 37 includes the non-transitory computer readable medium of Example 35 or Example 36, wherein the instructions further cause the one or more processors to, in response to the airport congestion level exceeding a threshold percentile of the distribution model, one or more of: generate an alert; update one or more flight arrival or departure predictions at the particular airport based on congestion at the particular airport; reallocate one or more resources at the particular airport; or adjust a flight plan of an aircraft in flight to the particular airport to improve fuel efficiency of the aircraft.
Example 38 includes the non-transitory computer readable medium of any of Examples 35 to 37, wherein the distribution model corresponds to a kernel density estimator (KDE) model.
Example 39 includes the non-transitory computer readable medium of any of Examples 35 to 38, wherein the one or more sources of global data include an airport mapping database, an aircraft tracking data source, and a weather data source.
Example 40 includes the non-transitory computer readable medium of any of Examples 35 to 39, wherein the historical usage metrics include one or more of: taxi-in data, taxi-out data, departures data, arrivals data, approaches data, ground movement data, weather data, or aircraft holding data.
Example 41 includes the non-transitory computer readable medium of any of Examples 35 to 40, wherein the data corresponding to the current usage metrics includes one or more of: taxi-in data, taxi-out data, departures data, arrivals data, approaches data, ground movement data, weather data, or aircraft holding data.
Example 42 includes the non-transitory computer readable medium of any of Examples 35 to 41, wherein the instructions further cause the one or more processors to process data from an airport mapping database and data from an aircraft tracking data source of the one or more sources of global data to determine, for a particular time interval at the particular airport, a count of aircraft that have landed, a count of aircraft that have taken off, a count of taxi operations for arriving aircraft, a count of taxi operations for departing aircraft, and a count of aircraft moving on ground.
Example 43 includes the non-transitory computer readable medium of Example 42, wherein the instructions further cause the one or more processors to determine, based on the data from the aircraft tracking data source, a count of aircraft on approach that have not yet landed during the particular time interval at the particular airport.
Example 44 includes the non-transitory computer readable medium of Example 42 or Example 43, wherein the instructions further cause the one or more processors to determine, based on the data from the aircraft tracking data source, a count of aircraft following a holding pattern during the particular time interval at the particular airport.
Example 45 includes the non-transitory computer readable medium of any of Examples 35 to 44, wherein one or more of the historical usage metrics or the current usage metrics are generated using a sliding window.
Example 46 includes the non-transitory computer readable medium of any of Examples 35 to 45, wherein the instructions further cause the one or more processors to: process the current usage metrics to generate a current arrival congestion index and a current departure congestion index; and determine the airport congestion level based on the current arrival congestion index, the current departure congestion index, and the distribution model.
Example 47 includes the non-transitory computer readable medium of any of Examples 35 to 46, wherein multiple distribution models are generated for each of multiple airports based on time of day.
Example 48 includes the non-transitory computer readable medium of Example 47, wherein the multiple distribution models are further based on weather condition.
Example 49 includes the non-transitory computer readable medium of Example 47 or Example 48, wherein the instructions further cause the one or more processors to periodically update the multiple distribution models based on updated historical data.
Example 50 includes the non-transitory computer readable medium of any of Examples 35 to 49, wherein the instructions further cause the one or more processors to, in response to the airport congestion level exceeding a threshold percentile of the distribution model, perform a mitigation action including one or more of: generate an alert; update one or more flight arrival or departure predictions at the particular airport based on congestion at the particular airport; or reallocate one or more resources at the particular airport.
Example 51 includes the non-transitory computer readable medium of any of Examples 35 to 50, wherein the instructions further cause the one or more processors to, in response to the airport congestion level exceeding a threshold percentile of the distribution model, adjust a flight plan of an aircraft in flight to the particular airport to improve fuel efficiency of the aircraft.
Example 52 includes the non-transitory computer readable medium of any of Examples 35 to 51, wherein the instructions further cause the one or more processors to: generate a congestion warning in response to the airport congestion level exceeding a first threshold percentile of the distribution model; and generate a congestion alert in response to the airport congestion level exceeding a second threshold percentile of the distribution model, wherein the second threshold percentile is larger than the first threshold percentile.
According to Example 53, an apparatus includes: means for obtaining historical data from one or more sources of global data associated with aircraft traffic, the historical data corresponding to historical usage metrics for a particular airport; means for processing the historical usage metrics to generate a distribution model associated with usage of the particular airport; means for obtaining data corresponding to current usage metrics for the particular airport from the one or more sources of global data; and means for determining, based on the distribution model and the current usage metrics for the particular airport, an airport congestion level for the particular airport.
Example 54 includes the apparatus of Example 53, wherein the one or more sources of global data include an airport mapping database, an aircraft tracking data source, and a weather data source.
Example 55 includes the apparatus of Example 53 or Example 54, wherein the distribution model corresponds to a kernel density estimator (KDE) model.
Example 56 includes the apparatus of any of Examples 53 to 55, wherein the one or more sources of global data include an airport mapping database, an aircraft tracking data source, and a weather data source.
Example 57 includes the apparatus of any of Examples 53 to 56, wherein the historical usage metrics include one or more of: taxi-in data, taxi-out data, departures data, arrivals data, approaches data, ground movement data, weather data, or aircraft holding data.
Example 58 includes the apparatus of any of Examples 53 to 57, wherein the data corresponding to the current usage metrics includes one or more of: taxi-in data, taxi-out data, departures data, arrivals data, approaches data, ground movement data, weather data, or aircraft holding data.
Example 59 includes the apparatus of any of Examples 53 to 58, wherein one or more of the historical usage metrics or the current usage metrics are generated using a sliding window.
Example 60 includes the apparatus of any of Examples 53 to 59, wherein multiple distribution models are generated for each of multiple airports based on time of day.
Example 61 includes the apparatus of Example 60, wherein the multiple distribution models are further based on weather condition.

The illustrations of the examples described herein are intended to provide a general understanding of the structure of the various implementations. The illustrations are not intended to serve as a complete description of all of the elements and features of apparatus and systems that utilize the structures or methods described herein. Many other implementations may be apparent to those of skill in the art upon reviewing the disclosure. Other implementations may be utilized and derived from the disclosure, such that structural and logical substitutions and changes may be made without departing from the scope of the disclosure. For example, method operations may be performed in a different order than shown in the figures or one or more method operations may be omitted. Accordingly, the disclosure and the figures are to be regarded as illustrative rather than restrictive.

Moreover, although specific examples have been illustrated and described herein, it should be appreciated that any subsequent arrangement designed to achieve the same or similar results may be substituted for the specific implementations shown. This disclosure is intended to cover any and all subsequent adaptations or variations of various implementations. Combinations of the above implementations, and other implementations not specifically described herein, will be apparent to those of skill in the art upon reviewing the description.

The Abstract of the Disclosure is submitted with the understanding that it will not be used to interpret or limit the scope or meaning of the claims. In addition, in the foregoing Detailed Description, various features may be grouped together or described in a single implementation for the purpose of streamlining the disclosure. Examples described above illustrate but do not limit the disclosure. It should also be understood that numerous modifications and variations are possible in accordance with the principles of the present disclosure. As the following claims reflect, the claimed subject matter may be directed to less than all of the features of any of the disclosed examples. Accordingly, the scope of the disclosure is defined by the following claims and their equivalents.

## Claims

1. A device comprising:
one or more processors configured to:
obtain, from one or more sources of global data associated with aircraft traffic, historical data corresponding to historical usage metrics for a particular airport;
process the historical usage metrics to generate a distribution model associated with usage of the particular airport;
obtain, from the one or more sources of global data, data corresponding to current usage metrics for the particular airport; and
determine, based on the distribution model and the current usage metrics for the particular airport, an airport congestion level for the particular airport.

2. The device of claim 1, wherein the distribution model corresponds to a kernel density estimator (KDE) model.

3. The device of claim 1 or claim 2, wherein the one or more sources of global data include an airport mapping database, an aircraft tracking data source, and a weather data source.

4. The device of any one of claims 1 to 3, wherein the historical usage metrics include one or more of: taxi-in data, taxi-out data, departures data, arrivals data, approaches data, ground movement data, weather data, or aircraft holding data.

5. The device of any one of claims 1 to 4, wherein the data corresponding to the current usage metrics includes one or more of: taxi-in data, taxi-out data, departures data, arrivals data, approaches data, ground movement data, weather data, or aircraft holding data.

6. The device of any one of claims 1 to 5, wherein the one or more processors are configured to process data from an airport mapping database and data from an aircraft tracking data source of the one or more sources of global data to determine, for a particular time interval at the particular airport, a count of aircraft that have landed, a count of aircraft that have taken off, a count of taxi operations for arriving aircraft, a count of taxi operations for departing aircraft, and a count of aircraft moving on ground.

7. The device of claim 6, wherein the one or more processors are further configured to determine, based on the data from the aircraft tracking data source,
- a count of aircraft on approach that have not yet landed during the particular time interval at the particular airport; and/or.
- a count of aircraft following a holding pattern during the particular time interval at the particular airport.

8. The device of any one of claims 1 to 7, wherein one or more of the historical usage metrics or the current usage metrics are generated using a sliding window.

9. The device of any one of claims 1 to 8, wherein the one or more processors are further configured to:
process the current usage metrics to generate a current arrival congestion index and a current departure congestion index; and
determine the airport congestion level based on the current arrival congestion index, the current departure congestion index, and the distribution model.

10. The device of any one of claims 1 to 9, wherein the one or more processors are configured to generate, for each of multiple airports:
- multiple distribution models based on time of day; or
- multiple distribution models based on time of day and further based on weather condition.

11. The device of claim 10, wherein the one or more processors are configured to periodically update the multiple distribution models based on updated historical data.

12. The device of any one of claims 1 to 11, wherein the one or more processors are further configured to, in response to the airport congestion level exceeding a threshold percentile of the distribution model,
- perform a mitigation action including one or more of:
generate an alert;
update one or more flight arrival or departure predictions at the particular airport based on congestion at the particular airport; or
reallocate one or more resources at the particular airport;
and/or
- adjust a flight plan of an aircraft in flight to the particular airport to improve fuel efficiency of the aircraft.

13. The device of any one of claims 1 to 12, wherein the one or more processors are configured to:
generate a congestion warning in response to the airport congestion level exceeding a first threshold percentile of the distribution model; and
generate a congestion alert in response to the airport congestion level exceeding a second threshold percentile of the distribution model, wherein the second threshold percentile is larger than the first threshold percentile.

14. A method comprising:
obtaining, at one or more processors, historical data from one or more sources of global data associated with aircraft traffic, the historical data corresponding to historical usage metrics for a particular airport;
processing, at the one or more processors, the historical usage metrics to generate a distribution model associated with usage of the particular airport;
obtaining, at the one or more processors, data corresponding to current usage metrics for the particular airport from the one or more sources of global data; and
determining, based on the distribution model and the current usage metrics for the particular airport, an airport congestion level for the particular airport.

15. A non-transitory computer readable medium storing instructions that, when executed by one or more processors, cause the one or more processors to:
obtain, from one or more sources of global data associated with aircraft traffic, historical data corresponding to historical usage metrics for a particular airport;
process the historical usage metrics to generate a distribution model associated with usage of the particular airport;
obtain, from the one or more sources of global data, data corresponding to current usage metrics for the particular airport; and
determine, based on the distribution model and the current usage metrics for the particular airport, an airport congestion level for the particular airport.
